# EUROPEAN PATENT SPECIFICATION

(11) **EP 0 993 133 B1**
(45) Date of publication and mention of the grant of the patent: **21.12.2005**
(21) Application number: 98118931.9
(22) Date of filing: 07.10.1998
(51) Int. Cl.: H04B 7/26, H04L 1/00

(54) **Data communications apparatus and method**
Datenkommunikationsverfahren und Vorrichtung
Procédé et système de communication de données

(43) Date of publication of application: 12.04.2000
(73) Proprietor: SIEMENS AKTIENGESELLSCHAFT, 80333 München (DE)
(72) Inventor: Emmer, Dieter, Dr.-Ing., 82110 Gemering (DE); Franz, Volker, 82178 Puchheim (DE); Bahrenburg, Stefan, Dipl.-Ing., 81477 München (DE)

(56) References cited:
- EP-A- 0 643 493
- WO-A-97/16899
- G. W. BEAKLEY: "Channel Coding for Digital HDTV Terrestrial Broadcasting" IEEE TRANSACTIONS ON BROADCASTING, vol. 37, no. 4, December 1991, pages 137-140, XP002095480

## Description

The present invention relates to data communications apparatus which operate to communicate data having parts of unequal importance. The present invention also relates to a method of communicating data having parts of unequal importance. More specifically, the present invention relates to data communications apparatus and methods of communicating data in which the data contains parts of unequal importance, and the data is generated at a rate which is not compatible with a rate at which data is communicated by a data transmission system.

Digital communications systems are arranged to communicate data between transmitters and receivers by representing the data in a form which facilitates transmission of the data via a medium through which communication is effected. For example, in the case of radio communications, the data is represented as radio signals and transmitted between transmitters and receivers of communications system via the ether. In the case of broadband telecommunications networks, the data may be represented as light and communicated via, for example, a fibre optic network between transmitters and receivers of the system.

As a result of a limited bandwidth which is available to any data communications system, the transmission of data bearing signals is often regulated so as to provide each of the transmitters of the system with a substantially fair access to the available communications bandwidth. To this end, data communications systems are often provided with data multiplexing means or multiple access means which serves to effect a substantially fair allocation of bandwidth to the transmitters. Known multiplexing or multiple access schemes arrange for the data to be transported between the transmitters and receivers in bursts, packets or blocks which are scheduled for transmission on the data carrying media by the multiple access or multiplexing scheme.

One example of such a multiple access scheme is that which is used to schedule transmission of radio signals in a mobile radio telephone system. The multiple access scheme operates to schedule radio communications between a plurality of transmitters and a corresponding plurality of receivers via the same radio frequency spectrum. In this case, the multiple access scheme operates to share access to the allocated radio frequency spectrum between each of the transmitters contemporaneously or sequentially. This is effected by dividing the data into packets or blocks, which are represented as radio signals, and which are transmitted in a time slot or time frame allocated to the transmitter by the multiple access scheme.

Another example of a data communications system in which data is transmitted or transported in packets or blocks, is that of a broadband telecommunications network which operates in accordance with Asynchronous Transfer Mode. In Asynchronous Transfer Mode telecommunications systems, data is transmitted as a plurality of cells, each of which comprises data to be directed to a particular receiver and information appertaining to an identification of the receiver to which the information is to be directed and the route via which the data should reach the receiver.

There is an increasing requirement for data communications systems to transport data from a plurality of different sources representative of various different data types. As such, the rate at which data may be produced may differ significantly between different data types, and may also differ in inherent characteristics. For example, one type of data source may be a speech coder which operates to generate frames of digital data representative of analogue speech signals produced by a user of the data communications system to conduct a telephone conversation. Other examples are the transmission of video pictures or captured images represented as digital data. As a result, the multiple access system forming part of the data communications system must be arranged to transport data from a variety of sources between the transmitters and the receivers of the system, the different data sources generating the data at different rates. For example, the generation of digital data representative of speech signals will occur at a substantially constant, and relatively low rate whereas the generation of digital data representing video images will be at a relatively high rate and in a case where only changes in the video images are transmitted, the digital data will be transmitted only intermittently. Other types of data source such as the transmission of computer data files is not constrained by a time of transmission of the data and therefore may occur at a substantially irregular or "bursty" rate.

As already explained, the multiple access scheme of a data communications system is typically arranged to optimise the use of the communications bandwidth allocated to the data communications system. As a result of the presence of a variety of different data types which could be transmitted by the data communications system, the multiple access scheme is often arranged to be optimised for the most prevalent or the most likely type of data to be communicated by the data communications system. As such the size of the packets, blocks or bursts, is therefore optimised for one particular type of data source traffic only. For example in the case of mobile radio telephony, the packet or burst size of radio signals in which data is conveyed, is often determined by the rate at which digital data representative of speech or voice signals is generated.

In a situation where a data source is generating data at a rate which is not compatible with that at which the data communications system has been optimised, frames of data generated by the data source will not be matched with the size of the packet, burst of block in which data is transported by the multiple access scheme. That is to say, that the size of the data frames generated by the data source will not fit with the pre-determined size of the data bearing block, packet or burst of the multiple access scheme. This might be because the data frame is too large or too small. If too large, then provision must be made to carry the frame in more than one transport data block. However, it is unlikely that the block will match exactly. As such, some provision must be made to the effect of filling the remaining data bearing capacity of the transport data packet, burst or block with data, in order to make optimum use of the communications bandwidth allocated to the transmitter by the multiple access scheme. This provision or process, is known to this skilled in the art as "rate matching". One technique of rate matching, presented in a publication describing the Air-interface of the Universal Telecommunications Radio Access Physical Layer Description, Specification System Volume 0.3, produced by the "Special Mobile Group 2, of the Universal Mobile Terrestrial System Physical Layer Expert Group of the European Telecommunications Standards Institute", at Chapter 3.2.3 is known as unequal repetition. Unequal repetition involves filling the remaining part of the transport data block with data selected from a part or the whole of the data frame which already part fills the rest of the transport data block. A further known rate matching scheme effected by repetition or code puncturing, is disclosed in the "Specification of the Air-Interface for Third Generation Mobile System" version 0, Volume 3, issued 18 December 1997, by the Association of Radio Industries and Businesses (ARIB) of Japan.

A further inherent characteristic of different sources of digital data, is that the data generated by the source is often of unequal importance. That is to say, that errors in some parts of the data generated by the data source will have a greater subjective or relative effect than errors in other parts of the data generated by the data source. A typical example of this is a digital data frame generated by a speech coder operating in accordance with a speech coding algorithm in which errors in a first segment of the data frame will have a considerably greater deleterious effect on the subjective quality of the reproduced voice signals than errors in a second part of the speech frame. Another example, is a frame or burst representative of video signals in which synchronisation information transmitted as part of the digital data frame have considerably greater importance than errors in other parts of the digital data frame.

EP 0 643 493, discloses an encoder/decoder apparatus for implementing an error control scheme in low bit rate coders in order to improve their performance in the presence of transmission errors. The fixed number of output bits of a half rate speech codec, are divided into three distinct classes Class 1, 2, and 3. Class 1 bits are encoded using a ½ rate Nordstrom code, Class 2 bits are encoded using a 8/14 rate Nordstrom code and Class 3 bits are not encoded at all. Once the coding is performed, the bits are interleaved and then transmitted.

WO 97 16899, discloses a data transfer method in a digital cellular radio network, the method comprising the step of channel coding the information to be transferred for transmission. In order to implement a fixed data rate by employing one time slot only for data transmission, bits that are to be transmitted are grouped together in blocks having a minimum size of 288 bits, are encoded using a ½ rate convolutional code and then puncturing bits from the resulting blocks so that the blocks contain no more than 456 bits.

G. W. Beakley, "Channel Coding for Digital HDTV Terrestrial Broadcasting" IEEE Transactions on Broadcasting , Vol.37, No. 4, December 1991, pages 137-140, discloses that channel coding is employed to avoid block errors and multiframe propagation in the transmission of HDTV.

According to the present invention there is provided a data communications apparatus in accordance with patent claim 1.

By arranging for a data frame having at least first and second parts to be converted into first and second transport data parts substantially in portion to the relative importance of the first and second data parts which the first and second transport data block represent, the first and second data parts may be communicated by the data communications apparatus in a way which both matches the size of the block in which information is transported by the multiple access scheme, and which matches the data rates of the data transport block to the relative importance of the first and second data parts.

The data from the first and second transport encoded data parts are punctured, whereby the more important of said first and second transport data parts is punctured less than the less important of said first and second transport data parts.

The term puncturing as used herein refers to and includes a process of cancelling or deleting bits from a encoded data block to the effect that the punctured bits are not transmitted with that data block. As is known to those skilled in the art, such puncturing has the effect of reducing the amount of data actually transmitted. At a receiver of the punctured encoded data block, the position of the punctured bits is known, although the bits are not known. The bits in the punctured positions are therefore unknown and so are represented as any possible value to the decoding algorithm of the error control code.

The first and second transport data blocks may be generated by selectively repeating the first and the second data according to their relative importance. At least one of the first and second transport data blocks may be generated by encoding the first or the second data with an error control code. The error control code may be first and second error control codes the encoding by the first and the second error control codes being arranged in accordance with the relative importance of the first and second data.

The term error control code as used herein refers to and includes any means of providing error detection or correction by adding redundancy to the encoded data in accordance with an algorithm applied to the data. Examples of error control codes known to those skilled in the art include convolutional codes, a Bose-Chaudhuri-Hocquenghem codes, Reed-Solomon codes, cyclic redundancy check codes or indeed any way of repeating or providing parity check bits to part of or the whole of a frame of digital data.

The first and second transport data blocks may be generated by a combination of encoding the first and second data with an error control code and puncturing the encoded data, whereby the more important of said first and second transport data parts is punctured less than the less important of said first and second transport data.

According to an aspect of the present invention there is provided a method of communicating first and second data as claimed in patent claim 11.

One embodiment of the present invention will now be described by way of example only with reference to the accompanying drawings, wherein;
- FIGURE 1: is a schematic block diagram of a mobile radio communications system;
- FIGURE 2: is a schematic block diagram of a transmitter and receiver forming part of the mobile radio communications system shown in Figure 1;
- FIGURE 3: is an illustrative block diagram representing the generation of a block of data for transport by the transmitter and receiver shown in Figure 2;
- FIGURE 4: is a further example of a data frame having three different parts of unequal importance; and
- FIGURE 5: is a further block diagram illustrating a further possible process of transmitting a frame of data with parts having unequal importance within a predetermined block size.

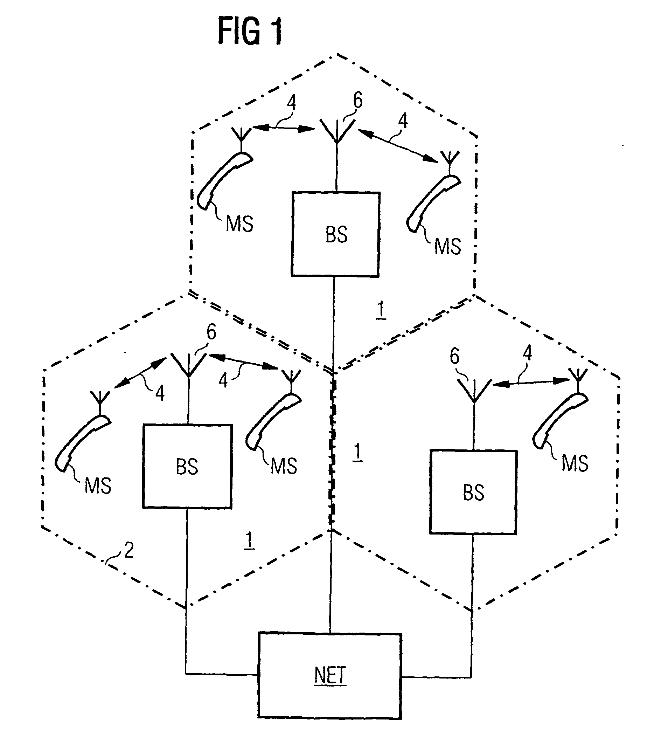

An example embodiment of the present invention will be described with reference to a mobile radio communications system. Such a mobile radio communications system may be provided with a multiple access system which might for example operate in accordance with Time Division Multiple Access (TDMA) such as that used in the Global System for Mobiles, which is a mobile radio telephone standard administered by the European Telecommunications Standards Institute. The mobile radio communications system alternatively could be provided with a multiple access system which operates in accordance with Code Division Multiple Access (CDMA) such as that proposed for the third generation Universal Mobile Telecommunication System. However, as will be appreciated, any data communications system could be used to illustrate an example embodiment of the present invention, such as a Local Area Network, or a Broadband Telecommunications Network operating in accordance with Asynchronous Transfer Mode. These illustrative example data communications systems are characterised in particular in that data is transmitted as bursts, packets or blocks. In the case of a mobile radio communications system, the data is transported in bursts of data bearing radio signals, which represent a pre-determined size data. An example of such a mobile radio communication system is shown in Figure 1.

In Figure 1, three base stations BS, are shown to communicate radio signals with mobile stations MS, within a radio coverage area formed by cells 1 defined by broken lines 2. The mobile stations MS, and base stations BS communicate data by transmitting radio signals designated 4 between antennas 6,coupled to the mobile stations MS and the base stations BS. The data is communicated between the mobile stations MS and the base stations BS using a data communications apparatus in which the data is transformed into the radio signals 4, which are communicated to the receive antenna 6, which detects the radio signals. The data is recovered by the receiver from the radio signals.

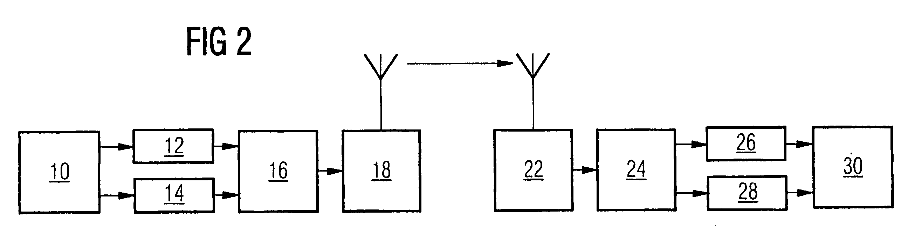

An example of a data communications apparatus forming a radio communications link between one of the mobile stations MS and one of the base stations BS, is shown in Figure 2. In Figure 2, a source of digital data 10, is shown to generate data frames having first and second data parts presented on separate conductors 11', 11'', to first and second error control encoders 12, 14. The data source 10, of the present example embodiment generates frames of digital data having N_{c} bits which represent analogue signals of a predetermined period. The first data is fed via the conductor 11' to the error control encoder 12, which operates to encode the first data part of the frame in accordance with a predetermined error control algorithm. Correspondingly, the second data part is fed on the further conductor 11'' to a second error control encoder 14, which operates to encode the second data part in accordance with a second error control encoding algorithm. As will be appreciated, the first and the second error control encoders 12, 14, could be formed by a common encoder which operates to generate an encoded version of the first and second data parts, using the same encoding algorithm. The encoded first and second data parts are thereafter fed via conductors to a rate converter 16. The rate converter 16, operates in combination with the error control encoders 12, 14, to convert the data frames generated by the data source 10, into transport data blocks for transport by a multiple access system of the radio communications apparatus.

The multiple access system operates to schedule transmission of bursts of radio signals via an air interface formed by the multiple access system, in a way which shares the radio frequency spectrum allocated to the mobile radio system between each of the transmitter and receiver pairs embodied within the mobile stations MS, and the base stations BS. Thus the encoded data frames having been generated by the first and second encoded data parts are formed into transport data blocks of a pre-determined size of N-bits corresponding to the size of the data bearing capacity of the bursts of radio signals. Thus, the rate converter 16, feeds the transport data blocks of N-bits to the radio transmitter 18, which operates to generate radio signals representative of the transport data block and to transmit the radio signals in accordance with the multiple access system. The radio signals are radiated by an antenna 6', attached to the radio transmitter 18, and propagate via the ether to a receiver antenna 6'', coupled to a radio receiver 22. The receiver 22 operates to down convert and recover the burst of radio signals to the effect of reforming the transport data block which was fed to the radio transmitter 18, by the rate converter 16. The block of transport data recovered by the radio receiver 22, is thereafter fed to a rate de-converter 24, which operates in combination with data decoders 26, 28, to recover the data frame. The rate de-converter 24, operates to separate the first and second encoded data parts from the transport data block and feeds the first encoded data parts to the data decoder 26, and the second encoded data parts to the second data decoder 28. The first and second data decoders 26, 28 operate to decode the first and second data parts and recover the first and second data parts which are thereafter fed to a sink for the data 30, which re-forms the recovered parts into the recovered data frames.

As already explained, a data communications systems of which the mobile radio communication systems shown in Figure 1 is but one example, must be arranged to transport data of different data types, which generate data at substantially different data rates. As such the size of the data bearing transport data block represented by the radio signals which are communicated by the multiple access system is matched to the most common or most prevalent data type. For second generation mobile radio telephone systems, such as the Global System for Mobiles (GSM), this is analogue speech signals. For third generation mobile radio systems, such as that known as the Universal Mobile Telecommunications System (UMTS) administered by the European Telecommunications Standard Institute, an even greater range of data types must be carried, requiring the multiple access system to be optimised for other data types, such as an integer division of an ISDN service, having a data rate of 64kbits per second. As such, a further data source, such as is the case in the present example, will most probably generate data at a different rate to that to which the radio transport system is matched, and as such the amount of data in a frame (N_{c}-bits) from the source in question will be unlikely to fill the transport block (N-bits) which can be carried by the radio signals.

As will be appreciated, a data frame generated by the data source 10, could be considered to made up from a number of N_{c}-bits, or symbols, where a symbol represents a plurality of bits. As such, the term bits as used herein can be interchanged with the term symbols, without effecting the scope of the example embodiments of the present invention.

Alternatively, where the data source 10, generates a frame of data which is greater than that which can be fitted into a transport data block conveyed by the radio signal burst, then a plurality of burst of radio signals must be employed in order to communicate the entire data frame. In either case, a technical problem posed is how to fill the remaining space of a transport data block in which information bits from the data frame are not sufficient to completely fill the transport data block. Furthermore, as shown in the example data communications system shown in Figure 2, the data generated by the source 10 is not of equal importance, in that the first data part may be more important than the second data part.

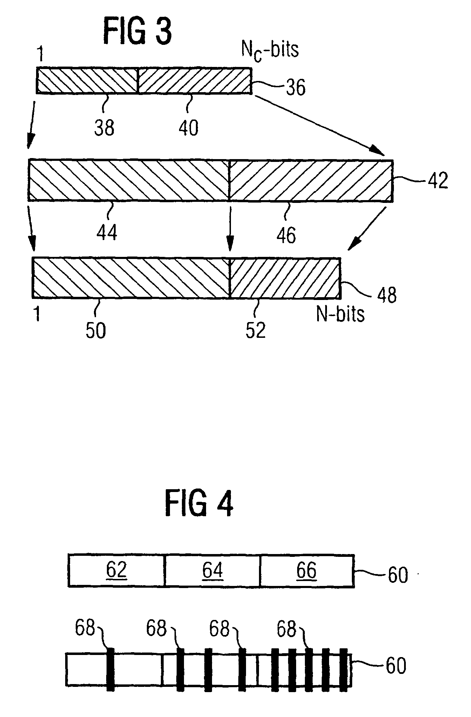

An arrangement, representing the operation of the data communications apparatus shown in Figure 2, according to an example embodiment of the present invention is shown in Figure 3. In Figure 3 the frame of data generated by the source 10 is represented as a data frame 36. The frame 36, is comprised of first data bits 38, and second data bits 40, which correspond to the different first and second data parts fed separately to the first and second data encoders 12, 14. As shown in Figure 3, after encoding the first and second data parts with the first and second error control codes, a data block 42 is produced. The block 42, is comprised of first encoded data bits 44 and second encoded data bits 46. The first and second encoded data bits 44, 46, have therefore increased the number of data bits to be transmitted in accordance with redundant data added to the data generated by the source 10. The redundant data is generated in accordance with the first and second error control codes. However as illustrated by the transport data block 48, shown in Figure 3, the total number of bits or symbols in the first and the second encoded data parts, exceeds the pre-determined data size (N-bits) which can be communicated in the transport data block. In order to effect a reduction in the size of data block 42, therefore, the data from the first and second encoded data blocks 44, 46, are punctured in order to remove certain of the data bits or symbols which are not transmitted. However, the puncturing of the first and second encoded data blocks 44, 46, is made in proportion to the relative importance of the first and second data which the first and second encoded data blocks represent. Therefore, the first encoded data part 44, is punctured less than the second encoded data part 46, in correspondence with the relative importance of the information which the first and second data represent. Thus the transport block is comprised of the first and second transport data blocks 50, 52 as shown in Figure 3.

As will be appreciated by those skilled in the art a data source may generate data frames having more than two data parts of unequal importance. As an example Figure 4 illustrates a data frame having three classes of data bits divided equally between the data frame. In Figure 4 a data frame 60, is shown to be comprised of three classes of data bits 62, 64 and 66. Also shown in Figure 4 is the data frame 60 with puncturing positions 68 shown superimposed where data bits are to be deleted. As will be appreciated by those skilled in the art the more data bits which are punctured from an encoded data frame, the weaker the error protection code will operate when the data is decoded. Thus as shown in Figure 4, the encoded data frame 60 having three classes of data bits 62, 64, 66 in decreasing order of importance, will be punctured to the effect that the first class of bits 62 is punctured less than the second class of bits 64, which is punctured less than the third class of bits 66. This is indicated by the proportional amount of puncturing positions shown by superimposed puncturing indicated by the lines 68. Accordingly, this implies that each part of the data frame is encoded using a code having substantially the same rate, but not necessarily the same code.

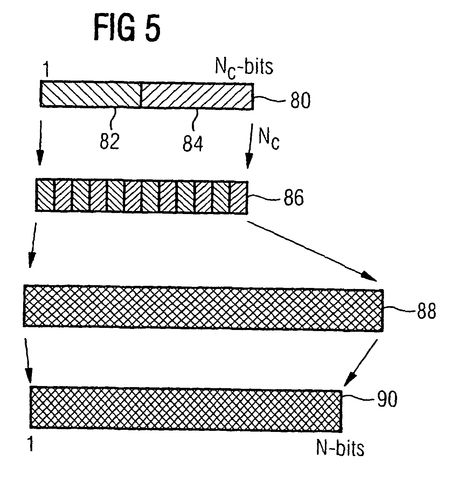

A further example of a process in which data frames are converted in accordance with a relative importance of the parts of the data frame, is shown in Figure 5. In Figure 5, a frame of data to be transmitted 80, is shown to be comprised of first and second data parts 82, 84, which are of unequal importance. As is known to those skilled in the art, errors which occur during transmission via radio signals, typically occur in bursts. Error control decoders used to decode error control encoded data are known to have greater difficulty correctly decoding data when errors occur in bursts. As such, one way of mitigating the effects of bursts of errors occurring during transmission, is to permute or scramble the data, that is to reposition parts of the data to other parts of the data frame with the effect that the bits or symbols from different parts of an encoded data frame are mixed. This is illustrated in Figure 5 by the data block 86, which is formed from the data block 80, with the first and second parts of the data 82, 84, distributed and re-positioned within the data block 80. Thereafter, the error control code is applied to the data block 86 and the encoded data block 88, is formed. Once again the encoded data block 88 is too large to fit into the payload of the transport data burst (N-bits) carried by the radio signals which may be transmitted within a time-slot of the multiple access scheme. As such, the bits of the encoded data burst 88, are punctured with the effect that the amount of data which must be transmitted is substantially reduced. This is shown by the data block 90, in Figure 5. However the data block 90 shown in Figure 5 is formed by puncturing the encoded data which is more important to a lesser extent than that of the less important data which is punctured more strongly.

The embodiment of the present invention has been illustrated with respect to the encoding of data with an error control code in order to add redundancy to the data being communicated, and thereby increasing the integrity of the communicated data frame. However, in another embodiment of the invention, encoding by the data encoders 12, 14, could be effected by selectively repeating parts of at the first or second data parts, or both first and second data parts. Therefore, in accordance with a further embodiment of the present invention, a frame of data being comprised of different data parts of unequal importance, would be arranged to form a transport data block for transmission over the data communications apparatus by selectively repeating the parts of the data frame with the effect that the more important data is repeated more than the less important data.

In a yet further embodiment of the present invention, the different data parts of the data frame are repeated as a whole, and these parts punctured unequally in accordance with and in proportion to the relative importance of the information which the data represents.

In a still further embodiment of the present invention, the first and second error control codes are arranged to encode the first and second data parts of the data frames at different rates, the rates being such as to reflect the relative importance of the data. The different rates could be arranged to the effect of matching the encoded data frame to the size of the data transport block. Alternatively the encoding could be combined with puncturing, to effect the rate matching.

In a yet further embodiment of the present invention, the first and second error control codes are arranged to encode the first and second data parts of the data frames at substantially the same rates, but with codes having different constraint lengths, to the effect that the difference in constraint lengths of the codes reflects the relative importance of the first and second parts.

As will be appreciated by those skilled in the art various modifications may be made to the aforementioned embodiments without departing from the scope of the present invention. In particular the present invention finds application with any form of data communications apparatus in which data is transmitted in predetermined sizes of packets, and in which data must be transmitted from a plurality of different data source types.

## Claims

1. Data communications apparatus for communicating data frames (36) having at least first (38) and second (40) data parts, which first and second data parts are of unequal importance, said communications apparatus comprising:
- data transport means (16, 18) which is arranged to communicate information in transport data blocks (48) of a pre-determined size;
- means (12, 14) for error control encoding using an error control code said data frame (36) into transport data blocks (42) being of a size which is substantially matched to said pre-determined transport data block (48) size, said transport data blocks having first (44) and second (46) transport data parts generated from said first (38) and second (40) parts of said data frames (36), the encoding being arranged in accordance with the relative importance of the data in said first (38) and second (40) parts, and
**characterised in that** said communications apparatus further comprising means (16) for converting said data blocks (42) into said pre-determined size transport data blocks (48) having first (50) and second (52) data parts, by puncturing data in said first (44) and second (46) transport data parts, whereby the more important of said first (44) and second (46) transport data parts is less punctured than the less important of said first (44) and second (46) transport data parts.

2. Data communications apparatus as claimed in Claim 1, wherein the size of said first and second transport data parts is substantially proportioned to the relative importance of said first and second data.

3. Data communications apparatus as claimed in Claim 2, wherein said first and second transport data parts are generated by selectively repeating at least one of the first and the second data, the repetition being arranged in accordance with the relative importance of the first and second data parts.

4. Data communications apparatus as claimed in Claim 1, wherein said error control code is first and second error control codes, the encoding by said first and said second error control codes being arranged in accordance with the relative importance of the first and second data.

5. Data communications apparatus as claimed in Claim 4, wherein the first and second error control codes have different constraint lengths or different minimum distances.

6. Data communications apparatus as claimed in Claim 4, wherein the first and second error control codes have different coding rates.

7. Data communications apparatus as claimed in Claim 1, and further including scrambling means, which operates to permute the first and second data parts before encoding.

8. Data communications apparatus as claimed in Claim 1, wherein said means for converting generates said first and second transport data parts by repeating the first and second data parts and selectively puncturing the repeated data, whereby the more important of said first and second data transport parts is punctured less than the less important of said first and second transport data parts.

9. A radio communicator, including a data communications apparatus as claimed in any preceding Claim, said data transport means being effected by the transmission of radio signals representative of said information block of pre-determined size.

10. Mobile radio communications apparatus, including a data communications apparatus as claimed in any of Claims 1 to 9, said data transport means being a multiple access scheme in which data is communicated in bursts of radio signals transmitted in at least one of a plurality of time slots, said bursts of radio signals being representative of said information block of pre-determined size.

11. A method of communicating data frames (36) having at least first (38) and second (40) data parts, which first and second data parts are of unequal importance, said method comprising the steps of:
- error control encoding using an error control code said data frames (36) into transport data blocks (42) being of a size which is substantially matched to a pre-determined block size in which information is communicated, said transport data blocks (42) having first (44) and second (46) transport data parts generated from said first (38) and second (40) parts of said data frames (36), the encoding being arranged in accordance with the relative importance of the data in said first (38) and second (40) parts, and
**characterised by** the step of converting said transport data blocks (42) into said pre-determined size transport data blocks (48) having first (50) and second (52) data part is accomplished by puncturing data in said first (44) and second (46) transport data parts, whereby the more important of said first (44) and second (46) transport data parts is less punctured than the less important of said first (44) and second (46) transport data parts.

12. A method as claimed in Claim 11, wherein the step of converting the data frame into the transport data block, includes the step of;
- increasing the size of said first and second transport data parts substantially in proportion to the relative importance of said first and second data.

13. A method as claimed in Claim 11, wherein the step of making the size of said first and second transport data parts substantially in proportion to the relative importance of the first and second data, includes the step of
- selectively repeating the first and the second data, the repetition being arranged in accordance with the relative importance of the first and second data parts.

14. A method as claimed in Claim 11, wherein the encoding by the error control code is effected by encoding the first and second data with first and second error control codes, the encoding by said first and said second error control codes being arranged in accordance with the relative importance of the first and second data.

15. A method as claimed in Claim 14, wherein the first and second error control codes have different constraint lengths or different minimum distances.

16. A method as claimed in Claim 14, wherein the first and second error control codes have different coding rates.

17. A method as claimed in Claim 11, and further including the step of;
- permuting said first and second data parts before encoding.

18. A method as claimed in Claim 11, wherein the step of converting the data frame to the transport data block, includes the steps of:
- repeating the first and second data parts and selectively puncturing the repeated data, whereby the more important of said first and second transport data parts is punctured less than the less important of said first and second transport data parts.

## Patentansprüche

1. Datenkommunikationsvorrichtung für die Übertragung von Datenrahmen (36), die mindestens aus ersten (38) und zweiten (40) Datenteilen bestehen, wobei die ersten und zweiten Datenteile von unterschiedlicher Wichtigkeit sind, wobei die besagte Datenkommunikationsvorrichtung Folgendes umfasst:
ein Datentransportmittel (16, 18), das dafür ausgelegt ist, Informationen in Transportdatenblöcken (48) einer vorab festgelegten Größe zu übertragen;
ein Mittel (12, 14) für die Fehlerkorrektur-Codierung des besagten Datenrahmens (36) in Transportdatenblöcke (42), deren Größe im Wesentlichen der besagten vorab festgelegten Größe des Transportdatenblocks (48) entspricht, mithilfe eines Fehlerkorrektur-Codes, wobei die besagten Transportdatenblöcke erste (44) und zweite (46) Transportdatenteile aufweisen, die aus den besagten ersten (38) und zweiten (40) Datenteilen der besagten Datenrahmen (36) erzeugt wurden, wobei die Codierung gemäß der relativen Wichtigkeit der Daten in besagten ersten (38) und besagten zweiten (40) Datenteilen erfolgt, und
**dadurch gekennzeichnet, dass** die besagte Datenkommunikationsvorrichtung ferner ein Mittel (16) umfasst, um die besagten Datenblöcke (42) in die besagten Transportdatenblöcke (48) mit vorab festgelegter Größe umzuwandeln, welche erste (50) und zweite (52) Datenteile umfassen, indem die Daten in den besagten ersten (44) und zweiten (46) Transportdatenteilen punktiert werden, wobei die wichtigeren der besagten ersten (44) und zweiten (46) Transportdatenteile in geringerem Umfang punktiert werden als die weniger wichtigen der besagten ersten (44) und zweiten (46) Transportdatenteile.

2. Datenkommunikationsvorrichtung gemäß Anspruch 1, wobei die Größe der besagten ersten und zweiten Transportdatenteile im Wesentlichen der relativen Wichtigkeit der besagten ersten und zweiten Datenteile entspricht.

3. Datenkommunikationsvorrichtung gemäß Anspruch 2, wobei die besagten ersten und zweiten Transportdatenteile erzeugt werden, indem selektiv mindestens einer des ersten und des zweiten Datenteils wiederholt wird, wobei die Wiederholung entsprechend der relativen Wichtigkeit der ersten und zweiten Datenteile erfolgt.

4. Datenkommunikationsvorrichtung gemäß Anspruch 1, wobei der besagte Fehlerkorrektur-Code ein erster und ein zweiter Fehlerkorrektur-Code ist, und wobei die Codierung durch die besagten ersten und zweiten Fehlerkorrektur-Codes entsprechend der relativen Wichtigkeit der ersten und zweiten Datenteile erfolgt.

5. Datenkommunikationsvorrichtung gemäß Anspruch 4, wobei die ersten und zweiten Fehlerkorrektur-Codes unterschiedliche Vorgabelängen oder unterschiedliche Mindestdistanzen aufweisen.

6. Datenkommunikationsvorrichtung gemäß Anspruch 4, wobei die ersten und zweiten Fehlerkorrektur-Codes unterschiedliche Coderaten aufweisen.

7. Datenkommunikationsvorrichtung gemäß Anspruch 1, die ferner ein Verwürfelungsmittel umfasst, welches die ersten und zweiten Datenteile vor der Codierung umordnet.

8. Datenkommunikationsvorrichtung gemäß Anspruch 1, wobei das besagte Mittel zur Umwandlung die besagten ersten und zweiten Transportdatenteile erzeugt, indem die ersten und zweiten Datenteile wiederholt und die wiederholten Daten selektiv punktiert werden, wobei die wichtigeren der besagten ersten und zweiten Transportdatenteile in geringerem Umfang punktiert werden als die weniger wichtigen der besagten ersten und zweiten Transportdatenteile.

9. Funkübertragungseinrichtung, die eine Datenkommunikationsvorrichtung gemäß einem der vorstehenden Ansprüche beinhaltet, wobei das besagte Datentransportmittel durch die Übertragung von Funksignalen realisiert wird, die stellvertretend für den besagten Informationsblock mit der vorab definierten Größe stehen.

10. Mobilfunk-Kommunikationsvorrichtung, die eine Datenkommunikationsvorrichtung gemäß einem der Ansprüche 1 bis 9 beinhaltet, wobei das besagte Datentransportmittel ein Vielfachzugriffs-Mechanismus ist, bei dem Daten in Funksignal-Impulsen in mindestens einem von einer Mehrzahl von Zeitschlitzen übertragen werden, wobei die besagten Funksignal-Impulse stellvertretend für den besagten Informationsblock mit der vorab definierten Größe stehen.

11. Verfahren zur Übertragung von Datenrahmen(36), die mindestens aus ersten (38) und zweiten (40) Datenteilen bestehen, wobei die ersten und zweiten Datenteile von unterschiedlicher Wichtigkeit sind, wobei das besagte Verfahren die folgenden Schritte umfasst:
Fehlerkorrektur-Codierung der besagten Datenrahmen (36) in Transportdatenblöcke (42), deren Größe im Wesentlichen einer vorab festgelegten Größe eines Blocks entspricht, in dem Informationen übertragen werden, mithilfe eines Fehlerkorrektur-Codes, wobei die besagten Transportdatenblöcke (42) erste (44) und zweite (46) Transportdatenteile aufweisen, die aus den besagten ersten (38) und zweiten (40) Datenteilen der besagten Datenrahmen (36) erzeugt wurden, wobei die Codierung gemäß der relativen Wichtigkeit der Daten in besagten ersten (38) und besagten zweiten (40) Datenteilen erfolgt, und
**gekennzeichnet durch** einen Schritt, die besagten Transportdatenblöcke (42) in die besagten Transportdatenblöcke (48) mit vorab festgelegter Größe umzuwandeln, welche erste (50) und zweite (52) Datenteile umfassen, indem die Daten in den besagten ersten (44) und zweiten (46) Transportdatenteilen punktiert werden, wobei die wichtigeren der besagten ersten (44) und zweiten (46) Transportdatenteile in geringerem Umfang punktiert werden als die weniger wichtigen der besagten ersten (44) und zweiten (46) Transportdatenteile.

12. Verfahren gemäß Anspruch 11, wobei der Schritt des Umwandelns des Datenrahmens in den Transportdatenblock folgenden Schritt umfasst:
Vergrößern der Größe der besagten ersten und zweiten Transportdatenteile im Wesentlichen entsprechend der relativen Wichtigkeit der besagten ersten und zweiten Datenteile.

13. Verfahren gemäß Anspruch 11, wobei der Schritt des Anpassens der Größe der besagten ersten und zweiten Transportdatenteile im Wesentlichen entsprechend zu der relativen Wichtigkeit der besagten ersten und zweiten Datenteile folgenden Schritt umfasst:
Selektives Wiederholen der ersten und zweiten Daten, wobei die Wiederholung entsprechend der relativen Wichtigkeit der ersten und zweiten Datenteile erfolgt.

14. Verfahren gemäß Anspruch 11, wobei der Schritt des Codierens durch den Fehlerkorrektur-Code ausgeführt wird, indem die ersten und zweiten Datenteile mit ersten und zweiten Fehlerkorrektur-Codes codiert werden, wobei die Codierung durch die besagten ersten und zweiten Fehlerkorrektur-Codes entsprechend der relativen Wichtigkeit der ersten und zweiten Datenteile erfolgt.

15. Verfahren gemäß Anspruch 14, wobei die ersten und zweiten Fehlerkorrektur-Codes unterschiedliche Vorgabelängen oder unterschiedliche Mindestdistanzen aufweisen.

16. Verfahren gemäß Anspruch 14, wobei die ersten und zweiten Fehlerkorrektur-Codes unterschiedliche Coderaten aufweisen.

17. Verfahren gemäß Anspruch 11, das ferner folgenden Schritt umfasst:
Umordnen der besagten ersten und zweiten Datenteile vor der Codierung.

18. Verfahren gemäß Anspruch 11, wobei der Schritt des Umwandelns des Datenrahmens in den Transportdatenblock folgende Schritte umfasst:
Wiederholen der ersten und zweiten Datenteile und selektives Punktieren der wiederholten Daten, wobei die wichtigeren der besagten ersten und zweiten Transportdatenblöcke in geringerem Umfang punktiert werden als die weniger wichtigen der besagten ersten und zweiten Transportdatenblöcke.

## Revendications

1. Dispositif de communication de données pour communiquer des trames de données (36) possédant au moins des premières (38) et secondes (40) parties de données, lesquelles premières et secondes parties de données sont d'importance inégale, ledit dispositif de communication comprenant:
- des moyens de transport de données (16, 18) qui sont configurés pour communiquer les informations en blocs de données de transport (48) d'une taille prédéterminée;
- des moyens (12, 14) pour effectuer un codage de contrôle d'erreur utilisant un code de contrôle d'erreur de ladite trame de données (36) en blocs de données de transport (42) d'une taille qui est substantiellement adaptée à ladite taille prédéterminée des blocs de données de transport (48), lesdits blocs de données de transport possédant des premières (44) et secondes (46) parties de données de transport produites à partir desdites premières (38) et secondes (40) parties desdites trames de données (36), le codage étant configuré conformément à l'importance relative des données dans lesdites premières (38) et secondes (40) parties, et
**caractérisé en ce que** ledit dispositif de communication comprend en outre un moyen (16) pour convertir lesdits blocs de données (42) en dits blocs de données de transport de taille prédéterminée (48) possédant des premières (50) et secondes (52) parties de données, en soumettant les données dans lesdites premières (44) et secondes (46) parties de données de transport à une perforation, moyennant quoi la plus importante desdites premières (44) et secondes (46) parties de données de transport est moins perforée que la moins importante desdites premières (44) et secondes (46) parties de données de transport.

2. Dispositif de communication de données selon la revendication 1, dans lequel la taille desdites premières et secondes parties de données de transport est substantiellement proportionnelle à l'importance relative desdites premières et secondes données.

3. Dispositif de communication de données selon la revendication 2, dans lequel lesdites premières et secondes parties de données de transport sont produites en répétant sélectivement au moins l'une des premières et secondes données, la répétition étant configurée conformément à l'importance relative des premières et secondes parties de données.

4. Dispositif de communication de données selon la revendication 1, dans lequel ledit code de contrôle d'erreur est constitué de premier et second codes de contrôle d'erreur, le codage par lesdits premier et second codes de contrôle d'erreur étant configuré conformément à l'importance relative des premières et secondes données.

5. Dispositif de communication de données selon la revendication 4, dans lequel les premier et second codes de contrôle d'erreur ont des longueurs de contrainte différentes ou des distances minimales différentes.

6. Dispositif de communication de données selon la revendication 4, dans lequel les premier et second codes de contrôle d'erreur ont des débits de codage différents.

7. Dispositif de communication de données selon la revendication 1, et comprenant en outre un moyen d'embrouillage qui fonctionne pour permuter les premières et secondes parties de données avant codage.

8. Dispositif de communication de données selon la revendication 1, dans lequel ledit moyen de conversion produit lesdites premières et secondes parties de données de transport en répétant les premières et secondes parties de données et en effectuant sélectivement une perforation des données répétées, moyennant quoi la plus importante desdites premières et secondes parties de transport de données est moins perforée que la moins importante desdites premières et secondes parties de données de transport.

9. Système de radiocommunication comprenant un dispositif de communication de données selon l'une quelconque des revendications précédentes, lesdits moyens de transport de données étant effectués par la transmission de signaux radio représentatifs dudit bloc d'information de taille prédéterminée.

10. Dispositif de radiocommunication mobile, comprenant un dispositif de communication de données selon l'une quelconque des revendications 1 à 9, lesdits moyens de transport de données étant une méthode d'accès multiple dans laquelle des données sont communiquées en rafales de signaux radio transmis dans au moins l'un d'une pluralité d'intervalles de temps, lesdites rafales de signaux radio étant représentatives dudit bloc d'information de taille prédéterminée.

11. Procédé de communication de trames de données (36) possédant au moins des premières (38) et secondes (40) parties de données, lesquelles premières et secondes parties de données sont d'importance inégale, ledit procédé comprenant les étapes consistant à :
- réaliser un codage de contrôle d'erreur, utilisant un code de contrôle d'erreur, desdites trames de données (36), en des blocs de données de transport (42) d'une taille qui est substantiellement adaptée à une taille prédéterminée de bloc dans laquelle les informations sont communiquées, lesdits blocs de données de transport (42) possédant des premières (44) et secondes (46) parties de données de transport produites à partir desdites premières (38) et secondes (40) parties desdites trames de données (36), le codage étant configuré conformément à l'importance relative des données dans lesdites premières (38) et secondes (40) parties, et
**caractérisé par** l'étape consistant à convertir lesdits blocs de données de transport (42) en dits blocs de données de transport de taille prédéterminée (48) possédant des premières (50) et secondes (52) parties de données est accomplie en soumettant les données dans lesdites premières (44) et secondes (46) parties de données de transport à une perforation, moyennant quoi la plus importante desdites premières (44) et secondes (46) parties de données de transport est moins perforée que la moins importante desdites premières (44) et secondes (46) parties de données de transport.

12. Procédé selon la revendication 11, dans lequel l'étape consistant à convertir la trame de données en bloc de données de transport, comprend l'étape consistant à :
- augmenter la taille desdites premières et secondes parties de données de transport substantiellement proportionnellement à l'importance relative desdites premières et secondes données.

13. Procédé selon la revendication 11, dans lequel l'étape consistant à rendre la taille desdites premières et secondes parties de données de transport substantiellement proportionnelle à l'importance relative des premières et secondes données comprend l'étape consistant à
- répéter sélectivement les premières et secondes données, la répétition étant configurée conformément à l'importance relative des premières et secondes parties de données.

14. Procédé selon la revendication 11, dans lequel le codage par le code de contrôle d'erreur est effectué en codant les premières et secondes données à l'aide de premier et second codes de contrôle d'erreur, le codage par lesdits premier et second codes de contrôle d'erreur étant configuré conformément à l'importance relative des premières et secondes données.

15. Procédé selon la revendication 14, dans lequel les premier et second codes de contrôle d'erreur ont des longueurs de contrainte différentes ou des distances minimales différentes.

16. Procédé selon la revendication 14, dans lequel les premier et second codes de contrôle d'erreur ont des débits de codage différents.

17. Procédé selon la revendication 11, et comprenant en outre l'étape consistant à;
- permuter lesdites premières et secondes parties de données avant codage.

18. Procédé selon la revendication 11, dans lequel l'étape consistant à convertir la trame de données en bloc de données de transport comprend l'étape consistant à :
- répéter les premières et secondes parties de données et effectuer sélectivement une perforation des données répétées, moyennant quoi la plus importante desdites premières et secondes parties de données de transport est moins perforée que la moins importante desdites premières et secondes parties de données de transport.
